# EUROPEAN PATENT SPECIFICATION

(11) **EP 4 184 380 B1**
(45) Date of publication and mention of the grant of the patent: **22.10.2025**
(21) Application number: 22208131.7
(22) Date of filing: 17.11.2022
(51) Int. Cl.: G06K 7/10, G06Q 10/087

(54) **RFID READER CONTROL INTEGRATED WITH SMART GARMENT**
RFID-LESERSTEUERUNG MIT INTEGRIERTEM INTELLIGENTEM KLEIDUNGSSTÜCK
COMMANDE DE LECTEUR RFID INTÉGRÉE À UN VÊTEMENT INTELLIGENT

(30) Priority: 18.11.2021 US 202117455467
(43) Date of publication of application: 24.05.2023
(73) Proprietor: DJB Group LLC, Dublin, OH 43017 (US)
(72) Inventor: BURNSIDE, Walter D, Dublin, 43017 (US); TSAI, Wei-Feng, Dublin, 43016 (US)
(74) Representative: Reddie & Grose LLP

(56) References cited:
- US-A1- 2013 048 724
- US-A1- 2018 285 609
- US-B2- 9 213 874

## Description

The invention relates to the application of RFID technology to assist a user/operator in locating and retrieving a specific item or items from a space containing a multitude of such items.

RFID technology is well known and is useful in providing RFID tag data typically associated with consumer goods. U.S. Patent 9,213,874 discloses an RFID tag sensing garment worn by an employee. The garment disclosed in this patent affords an advance in productivity since it is capable of registering the presence of nearby RFID tags (hereafter simply "tags") and therefore the location of their associated goods. US 2018/285609 A1 discloses a garment worn by an employee, such as a vest. The garment is disclosed to include an RFID reader and the hardware necessary to read RFID tags in a remote location and emulate the RFID tags. When the employee returns to a designated area, the garment automatically transmits the emulated RFID tags, which are read by RFID readers in the designated area. US 2013/048724 A1 discloses a system for integrating bar code and RFID tag technologies in retail dispenser shelving to provide real-time shelf inventory status. Retail items opaque to radio waves and properly located on a shelf will overlie and electromagnetically shield underlying tags so that these tags cannot be seen by the shelf antennas. The shelf antennas communicate with a reader unit that identifies any tags illuminated by the antennas. The reader unit, in turn, communicates with a computer-based controller which is programmed to monitor and report changes in shelf inventory.

Situations exist where numerous RFID tagged items are placed in a random or disorganized grouping and are retrieved in a sequence determined by factors not directly related to the items themselves. Where the number of items is voluminous, the task of manually finding a specific tagged item is often time consuming and frustrating, both of these conditions leading to low productivity.

The invention provides a portable RFID system, preferably associated with a garment, that enables a wearer/operator to locate a specific RFID tagged item or items. When the item or items is/are located, a signal is sent from the system to the operator. The operator's hands, being free of the system, can grasp the item and re-locate it to a desired place from where it can be delivered or otherwise processed.

The invention will now be further described by way of example with reference to the accompanying drawings, in which:
FIG. 1 is a showing of an operator wearing a smart garment of the invention in the form of a vest;
FIG. 2 is a rear view of the operator illustrating one arrangement of an antenna array, a reader/small board computer and associated battery;
FIG. 3 is a side view of the operator diagrammatically illustrating the distribution of radiation from an antenna array of the RFID reader system associated with the smart garment;
FIG. 4 is a view of a preferred antenna array depicted in a flat configuration; and
FIG. 5 is a block diagram illustrating the relationship of components of the invention.

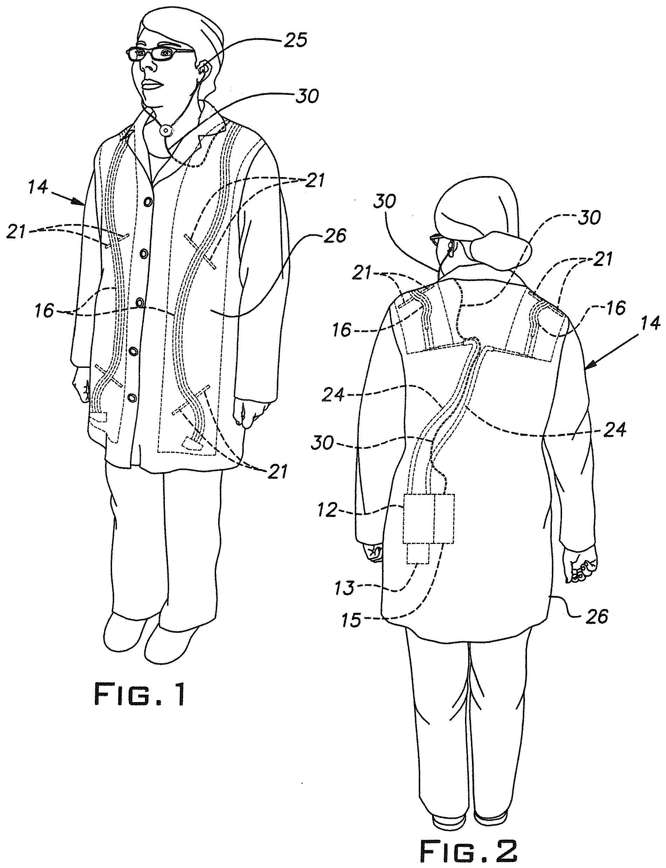

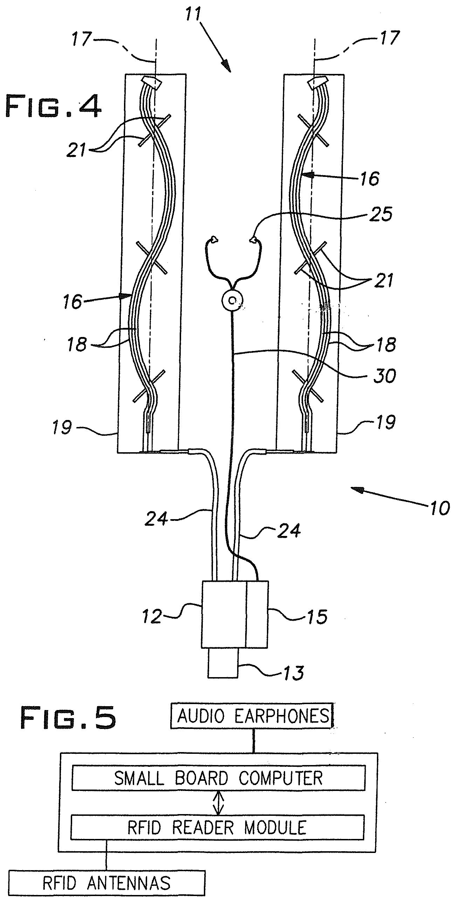

The invention relates to a portable RFID system 10 that includes an antenna array 11, a reader 12, a small board computer(SBC) 15 and a battery power supply 13 laid out in the plane of the drawing for illustration purposes in FIG. 4. A person or operator 14 depicted in FIGS. 1-3 carries the system 10 to scan RFID tags each associated with an individual object, typically a product, a component, package, or the like. With the system 10 of the invention, the operator 14 is free to circulate, hands free, through a space where RFID tagged goods are situated.

A preferred antenna array 11 of the present invention can be similar to that disclosed in U.S. Pat. No. 8,058,998. The present antenna array 11 for radiating or receiving electromagnetic signals, unlike that disclosed in this patent, comprises highly flexible elongated antennas 16 that can be readily folded out of a single plane and are of limited length.

Referring again to FIG. 4, the antenna array 11 preferably comprises two serpentine antennas 16. Each antenna 16, while lying on a flat support, has an elongated axis indicated by the broken line 17 across which a pair of parallel curvilinear feed lines 18 pass back and forth. The antennas 16 may be constructed of a rectangular, flexible, dielectric base sheet or film 19 such as Mylar^{®} on which the feed lines 18, made of an electrically conductive material such as a copper or an aluminum foil, are adhesively attached or otherwise fixed. At spaced locations, the feed lines 18 have perturbations in the form of relatively short stubs 21. The stubs or dipole radiators 21 which are designed to radiate RF energy are typically made of the same material as the feed lines 18 and are electrically connected to a respective feed line. Adjacent pairs of the stubs 21, one on each feed line 18, form dipoles. Preferably, each stub 21 extends at a right angle to the local part of the feed line 18 to which it is joined.

An antenna 16 measured along its axis 17 is about 3 ft. long and the base sheet 19 supporting the stubs 21 is about 7 in. wide. Each antenna 16 is encased in a high durability water-resistant elongated flat fabric pouch. A soft cushion layer of batting is placed in the pouch on the side of the antenna 16 which is to face the operator 14 that will carry the antenna array 11. A coaxial cable 24, with its center conductor and its outer conductive sheath each connected to one of the feed lines 18 of the associated antenna 16 projects out of a pouch.

An effective way of deploying the antenna array 11 is to attach the individual antennas 16 to the inside of a vest 26 or similar garment. Preferably, the antennas 16 are positioned in the garment 26 so that one is on the left and one is on the right and the major length of each is at the front of the garment. The cables 24 are disposed on the inside back of the garment 26 and the radiators or stubs 21 proximate to a cable of each antenna are adjacent a shoulder of the garment 26.

The pouches are preferably releasably held in place on the interior of the garment 26 by a suitable technique such as with Velcro^{®}, snaps, buttons, zippers, pockets or other suitable fasteners. The releasable fasteners enable the pouch to be removed from the garment 26 so that the garment can be laundered or even replaced.

The RFID reader 12 is connected to the antennas 16 through the respective cables 24. The reader 12, small board computer (SBC) 15 and power supply 13, typically a rechargeable battery electrically connected to the reader and SBC 15, are carried by the operator 14 wearing the garment 26. The reader 12 and SBC 15 integrated as a single device, and power supply 13 can be located in an inner pocket on the garment 26, secured by fasteners to the garment, mounted on a waist belt separate from the garment or otherwise carried on the body of the operator 14.

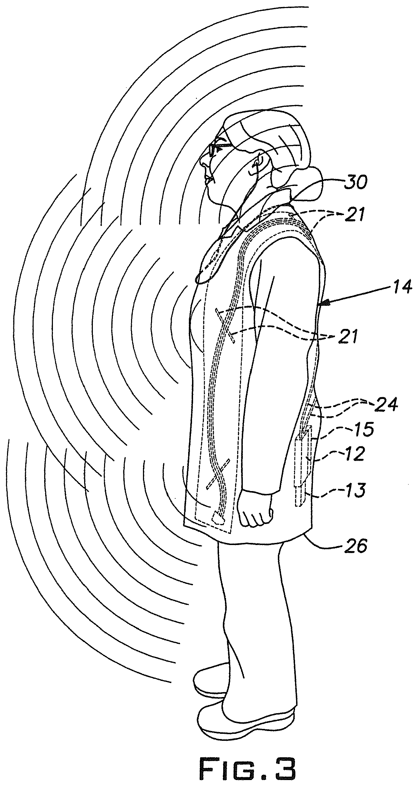

FIGS. 1-3 illustrate a preferred arrangement of the antenna array 11 being worn by the operator or individual 14. FIG. 3 is a diagrammatic representation of the RF beams produced by the individual dipole radiators 21 when the reader powers the antennae. It will be understood that the antenna array 11 radiates into a near space in front of the operator 14 wearing it in a pattern that is generally columnar, extending from floor level to a level overhead of the operator 14. Depending on the selected power level, the range or coverage zone of the antenna array 11 can be between 2 and 6 ft. around the front of the garment 26.

RF power density that reaches the user is minimal. The power is distributed across all of the antenna stubs 21. Antennas are preferably alternately powered, thus cutting the duty cycle in half. The reader 12 energizes the antenna dipoles 21 and receives RFID signals from tags through the antenna dipoles. Where desired, the operator 14 wearing the garment 26 can be shielded from antenna radiation by providing a reflective material, for example, in the form of a conductive metal film or cloth next to the operator. The spacing of this reflective material, which can be provided, for example, by the batting, should be at least 3/4 in. from the dipoles 21.

With reference to FIG. 5, the computer 15 is preferably a single board or small board computer (SBC) hard wired to the reader 12 to enable the SBC to control functions of the reader. The SBC 15 is used to provide or supplement the processing of the reader 12 since, as is conventional, present day readers have insufficient processing capacity to perform the operations attributed to the reader/computer in this disclosure. Future readers with increased processing would be equivalent to the disclosed reader 12 supplemented in its processing by the SBC 15. The reader 12 and/or SBC 15 may include a processor (such as an integrated circuit), discrete circuitry, memory, transceivers (or transmitters and/or receivers individually), and/or input/output interfaces (such as ports, terminals, and the like). The SBC sends audio signals to the operator by way of headphones or ear buds 25. The earphones 25 communicate from the SBC by wire through a cable 30 that may be hard wired or connected via an input/output interface. Alternatively, these signals can be sent wirelessly, for example, via BLUETOOTH or like communication protocols. Other alternatives include a speaker physically associated with the computer 15.

Data collected by the reader 12 is immediately sent to the SBC 15 that processes the data and sends audio signals related to the tags being read. For example, the SBC 15 is programmed to send an audio signal to the operator 14 when a tag being sought is seen by the reader module. While audio signals from the SBC 15 are preferred when a tag is being sought is detected, other techniques are contemplated such as visible light or vibration.

The coverage zone of the reader system 10 on the smart garment 26 moves with the operator 14. The reader system 10 can be used, for example, to find a specific tag or tags on an item or items amongst a very large number of tagged items. Once a desired tag, the identity of which is previously loaded into the reader 12 and SBC 15, for instance wirelessly by a remote server or controller, is known to be located within the coverage zone in front of the smart garment 26, the operator 14 can easily use both hands to move items within the zone to pinpoint the desired tagged item or items. Then the operator 14 can pick up the item or items and easily place them in a desired location for further access and/or delivery.

After receiving original instructions from a server or controller identifying a desired tag or tags, only RFID tag information developed by the reader 12 is used to command and control the reader. This inventive concept is based on collecting RFID data and then using this data alone and associated processing to control the full system operation. All the processing is done within the reader 12 and associated small board computer (SBC) 15. The SBC 15 has sufficient processing to analyze the RFID data and appropriately control the reader to collect the desired data to process. Then the SBC 15 uses prestored command and control audio information to inform the operator 14 of its operational status via the earpiece 25.

The following section is used to explain the system operation via a specific example.

### System Operational Example

In this example, assume that the smart garment operator 14 has been assigned to find tagged items amongst a very large number of tagged items such as might be found in a large delivery truck. When this truck arrives at a specific delivery location, the smart garment operator 14 will be informed of the number of tagged items to be delivered to this location/customer. This information is also loaded into the SBC 15 associated with the reader 12. When this information is loaded into the SBC 15 memory, the reader 12 is put into search mode by the SBC. The first step in this mode is to inform the operator that he needs to find a specific number of tagged items. The reader 12 immediately starts collecting RFID tag data. If one or more of the desired tags is seen by the system 10, an indicator sound is activated to tell the operator that at least one desired tag is seen by the reader. This sound will continue as the operator searches through the items to find at least one desired item. Once at least one item is found and is being carried away from the place where it was found, the system will determine that the operator is moving away and will stop the indicator sound. The operator's motion away is determined within the SBC 15 by recording the identity of all of the tags seen by the reader in the location where the desired tagged item is found. Then as the operator 14 moves away from this location, the reader 12 will not see the previous tagged items, which clearly means that he is moving away. Since the operator is still holding the desired item, the reader will see that the item is still in his hands and the previous adjacent tags are gone. Further, the system verifies that the item in the operator's hands is at least one of the desired items.

### Reader Operation Finding a Single Tagged Item

1. The desired item tag number is loaded into the SBC 15.
2. The SBC 15 tells the operator that he must find one tag.
3. The reader 12 immediately starts reading RFID tags.
4. The operator moves amongst the tagged items facing the items.
5. Once the tagged item is seen by the reader 12, the SBC 15 sends an indicator sound to the operator.
6. The operator recognizes the sound to mean that he is very close to the desired tagged item and he digs amongst the items in front of him.
7. Once the operator finds the desired item, e.g., by some visual indicia on the item, he holds it in his hands and walks away.
8. As the operator moves away, the tags previously close to the desired item disappear from the present tag data and the systems knows that he is moving since he has correctly found and holds the desired item.
9. The SBC tells the operator that he has successfully found the correct item.
10. The reader stops reading tags and the SBC shuts down operation.

### Reader Operation Finding Multiple Tagged Items

1. The desired item tag numbers are loaded into the SBC 15.
2. The SBC tells the operator that he must find a certain number of tags.
3. The reader immediately starts reading RFID tags.
4. The operator moves amongst the tagged items facing the items.
5. Once one or more tagged items are seen by the reader, the SBC sends an indicator sound to the operator.
6. If more than one tag is seen, the SBC tells the operator the number of tags seen at the present location.
7. The operator recognizes the sound to mean that he is very close to desired tagged items and he digs amongst the items in front of him.
8. Once the operator finds and picks up one or more items, the SBC tells the operator how many of the desired tag items are seen.
9. If the reader still sees other tagged items in the present location, the SBC tells the operator how many are still at the present location.
10. This process continues at the present site until all the tagged items at that site are obtained.
11. As the operator moves away, the tags previously close to the desired items disappear from the present tag data seen by the reader, and the system knows that he is moving since he has correctly found and holds all the desired items from that location.
12. If there are more tagged items to be found, the SBC informs the operator that he still has to find so many more tagged items, this same process is repeated until all the items are found.
13. Once the operator has found all the desired items, the SBC tells the operator that he has successfully found all the correct items.
14. The reader stops reading tags and the SBC shuts down operation.

Due to the flexibility of the pouch including its contents and the low weight owing to its cloth/film construction, an operator 14 wearing the garment 26 is neither significantly burdened nor restricted in his or her movement by the system 10. In particular, the operator's hands and arms are completely free to accomplish any required task while wearing the garment mounted system. It will be understood that an operator wearing the system can walk or otherwise traverse a space in which RFID tagged items are situated. The system 10 will read all of the tags within the range or coverage zone of the antenna array 11.

While the antenna array has been described as being mounted on a vest-style garment, other arrangements are envisioned. Other possible garments include a lab coat or gown in which case the length of the antenna can be increased. It is also possible to arrange the antenna array in a stole or scarf garment.

## Claims

1. A method of retrieving a specific RFID tagged item from a group of RFID tagged items comprising the steps of scanning the group with a RFID reader (12) carried by an operator (14), when the reader (12) finds the tag of the specific item to be retrieved in its range, causing processing associated with the reader (12) to record the identity of the tags of the group within the range of the reader (12) and signaling the operator (14) of such finding, allowing the operator (14) to retrieve the specific item from the group and move away from the group with the specific item, the processing associated with the reader (12) being programmed to detect changes in the tags being read from those recorded when the specific item tag was found and interpreting the detected tag changes as movement of the operator (14) associated with retrieval of the specific item.

2. A method as set forth in claim 1, wherein the processing associated with the reader (12) is programmed to verify with the reader (12) that the operator (14) is carrying the correct item after movement is interpreted.

3. A portable RFID tag reading system (10) to be carried by an operator (14) and including a reader (12) with associated processing, the processing being programmed to record as a set the identity of all RFID tags in the range of the reader (12) when the reader (12) finds a specific RFID tag, and **characterized in that** the processing is programmed to detect changes in the tags being read from those recorded after the specific RFID tag is found and to interpret the detected tag changes as movement of the operator (14).

4. The system (10) of claim 3, arranged on a garment (26) worn by the operator (14).

5. The system (10) of either claim 3 or claim 4, wherein the processing is programmed to verify when operator (14) movement is detected that the operator (14) is carrying the item bearing the specific RFID tag.

6. The system (10) of any one of claims 3 to 5, wherein said associated processing is provided by a small board computer (15).

## Patentansprüche

1. Verfahren zum Auffinden eines bestimmten RFID-etikettierten Artikels aus einer Gruppe von RFID-etikettierten Artikeln, das die folgenden Schritte beinhaltet: Scannen der Gruppe mit einem von einem Bediener (14) getragenen RFID-Leser (12), Bewirken, wenn der Leser (12) das Etikett des aufzufindenden bestimmten Artikels in seiner Reichweite findet, einer mit dem Leser (12) assoziierten Verarbeitung, um die Identität der Etiketten der Gruppe innerhalb der Reichweite des Lesers (12) aufzuzeichnen, und Benachrichtigen des Bedieners (14) über ein solches Auffinden, so dass der Bediener (14) den bestimmten Artikel aus der Gruppe nehmen und sich mit dem bestimmten Artikel von der Gruppe entfernen kann, wobei die mit dem Leser (12) assoziierte Verarbeitung so programmiert ist, dass sie Änderungen an den gelesenen Etiketten gegenüber den aufgezeichneten Etiketten, als das bestimmte Artikeletikett gefunden wurde, erkennt und die erkannten Etikettenänderungen als eine mit der Entnahme des bestimmten Artikels assoziierte Bewegung des Bedieners (14) interpretiert.

2. Verfahren nach Anspruch 1, wobei die mit dem Leser (12) assoziierte Verarbeitung programmiert ist zum Überprüfen mit dem Leser (12), dass der Bediener (14) den richtigen Artikel trägt, nachdem die Bewegung interpretiert wurde.

3. Tragbares RFID-Etikettenlesesystem (10) zum Tragen durch einen Bediener (14), das einen Leser (12) mit assoziierter Verarbeitung umfasst, wobei die Verarbeitung zum Aufzeichnen der Identität aller RFID-Etiketten in Reichweite des Lesers (12) als Satz programmiert ist, wenn der Leser (12) ein bestimmtes RFID-Etikett findet, und **dadurch gekennzeichnet, dass** die Verarbeitung zum Erkennen von Änderungen an den gelesenen Etiketten gegenüber den aufgezeichneten Etiketten nach dem Auffinden des bestimmten RFID-Etiketts und zum Interpretieren der erkannten Etikettenänderungen als Bewegung des Bedieners (14) programmiert ist.

4. System (10) nach Anspruch 3, das an einem vom Bediener (14) getragenen Kleidungsstück (26) angeordnet ist.

5. System (10) nach Anspruch 3 oder Anspruch 4, wobei die Verarbeitung programmiert ist zum Überprüfen bei Erkennung einer Bewegung des Bedieners (14), dass der Bediener (14) den Artikel mit dem bestimmten RFID-Etikett bei sich trägt.

6. System (10) nach einem der Ansprüche 3 bis 5, wobei die genannte assoziierte Verarbeitung durch einen kleinen Bordcomputer (15) bereitgestellt wird.

## Revendications

1. Procédé d'extraction d'un article spécifique doté d'une étiquette RFID à partir d'un groupe d'articles dotés d'une étiquette RFID, comprenant les étapes consistant à balayer le groupe avec un lecteur RFID (12) porté par un opérateur (14), lorsque le lecteur (12) trouve dans sa portée l'étiquette de l'article spécifique à extraire, lancer un traitement associé au lecteur (12) pour enregistrer l'identité des étiquettes du groupe à portée du lecteur (12) et signaler ce résultat à l'opérateur (14), permettant à l'opérateur (14) d'extraire l'article spécifique du groupe et de s'éloigner du groupe avec l'article spécifique, le traitement associé au lecteur (12) étant programmé pour détecter des modifications des étiquettes lues par rapport à celles enregistrées lorsque l'étiquette de l'article spécifique a été trouvée et interpréter les modifications d'étiquette détectées comme un mouvement de l'opérateur (14) associé à l'extraction de l'article spécifique.

2. Procédé selon la revendication 1, dans lequel le traitement associé au lecteur (12) est programmé pour vérifier avec le lecteur (12) que l'opérateur (14) emporte le bon article après l'interprétation du mouvement.

3. Système portable de lecture d'étiquettes RFID (10) destiné à être porté par un opérateur (14) et comportant un lecteur (12) et son traitement, le traitement étant programmé pour enregistrer en tant qu'ensemble l'identité de toutes les étiquettes RFID à portée du lecteur (12) lorsque le lecteur (12) trouve une étiquette RFID spécifique, et **caractérisé en ce que** le traitement est programmé pour détecter des modifications des étiquettes lues par rapport à celles enregistrées après que l'étiquette RFID spécifique a été trouvée et interpréter les modifications d'étiquettes détectées en tant que mouvement de l'opérateur (14).

4. Système (10) selon la revendication 3, disposé sur un vêtement (26) porté par l'opérateur (14) .

5. Système (10) selon la revendication 3 ou la revendication 4, dans lequel le traitement est programmé pour vérifier, lorsque le mouvement de l'opérateur (14) est détecté, que l'opérateur (14) emporte l'article portant l'étiquette RFID spécifique.

6. Système (10) selon l'une quelconque des revendications 3 à 5, dans lequel ledit traitement associé est assuré par un petit ordinateur de bord (15).
